Europäisches Patentamt

European Patent Office

Office européen des brevets

(11) Publication number: **0 048 059**
**B1**

(12) **EUROPEAN PATENT SPECIFICATION**

(45) Date of publication of patent specification: **02.01.86**

(21) Application number: **81200998.3**

(22) Date of filing: **09.09.81**

(51) Int. Cl.⁴: **C 08 L 55/02, C 08 L 51/04, C 08 L 25/12, C 08 L 25/16**

(54) **Polymer composition of graft copolymers of styrene and acrylonitrile on a rubber.**

(30) Priority: **11.09.80 NL 8005110**

(43) Date of publication of application:
**24.03.82 Bulletin 82/12**

(45) Publication of the grant of the patent:
**02.01.86 Bulletin 86/01**

(84) Designated Contracting States:
**AT BE CH DE FR GB IT LI NL SE**

(56) References cited:
**EP-A-0 044 101**
**FR-A-2 268 832**
**FR-A-2 268 833**
**US-A-3 928 494**

The file contains technical information
submitted after the application was filed and
not included in this specification

(73) Proprietor: **STAMICARBON B.V.**
**Postbus 10**
**NL-6160 MC Geleen (NL)**

(72) Inventor: **Van Bokhoven, Petrus Hubertus Maria**
**Steinhartstraat 9**
**NL-6174 RH Sweikhuizen (NL)**
Inventor: **Van der Loos, Jozef Lambertus Maria**
**Rijksweg Zuid 146**
**NL-6134 AE Sittard (NL)**
Inventor: **Tijssen, Jan**
**Alexanderstraat 40**
**NL-6176 BR Spaubeek (NL)**
Inventor: **Hoen, Johannes Gerardus**
**Prevotlaan 9**
**NL-6132 BM Sittard (NL)**

(74) Representative: **Hatzmann, Marinus Jan et al**
**OCTROOIBUREAU DSM P.O.Box 9**
**NL-6160 MA Geleen (NL)**

Courier Press, Leamington Spa, England.

## Description

The invention relates to a thermoplastic composition based on one or more graft copolymers of styrene and acrylonitrile on a rubber, and a copolymer of α-methyl styrene and acrylonitrile (ABS polymers).

The invention also relates to moulded products consisting wholly or partly of the polymer composition.

The name "ABS" is derived from the first letters of the monomers of acrylonitrile, butadiene and styrene, from which the graft copolymers have in principle been prepared.

Thermoplastically mouldable ABS polymers are heterogeneous plastics consisting of two phases. An elastic material, in principle based on polybutadiene, and/or butadiene copolymers, in the presence of which styrene and acrylonitrile have been polymerized, is dispersed as internal discontinuous phase in a thermoplastic styrene-acrylonitrile copolymer as matrix (SAN matrix). In principle saturated elastomeric components can also be used as elastic material.

The physical properties of ABS polymers are only partly to be derived from the properties of the monomeric and/or polymeric components thereof. One of the most important properties, the impact resistance, is determined by the two-phase structure formed by a rubber phase embedded in a hard, brittle, thermoplastic matrix.

The heat resistance of these ABS polymers is insufficient, however, for some uses. This particularly concerns the automobile industry, domestic and electrical appliances.

From a number of publications it is known that complete or partial replacement of styrene by α-methyl styrene in ABS and/or SAN has a positive effect on the heat resistance.

From the American patent specification 3,010,936 a polymer composition is known based on a copolymer of α-methylstyrene and acrylonitrile or a terpolymer of α-methylstyrene, styrene and acrylonitrile mixed with a graft copolymer of styrene and acrylonitrile on a butadiene rubber.

With the polymer composition according to that patent specification the problem arises that, in order to reach a proper degree of heat resistance, the copolymer or terpolymer content of the polymer composition must be rather high, which is not quite possible, however, because it will cause the impact resistance to fall to unacceptably low values. Moreover, the flow behaviour of such polymer compositions is very poor.

From the Dutch patent specification 123.514 it is known how to make a polymer composition consisting for 68—85% of a copolymer of α-methylstyrene and acrylonitrile and 32—15% of a graft copolymer of 40—50 parts by weight styrene and acrylonitrile to 50—60 parts by weight of polybutadiene. Such a polymer composition, too, has the disadvantage that the flow behaviour is very poor, which is caused by the high rubber content of the graft polymer and the high percentage of copolymer with a poor flow.

In the German patent specification 2.140.437 mixtures of ABS, SAN and a copolymer of α-methylstyrene and acrylonitrile are described. According to that patent specification it is possible to overcome the problems which occur in respect of the flow behaviour of a mixture of ABS and a copolymer of α-methylstyrene and acrylonitrile by adding SAN to this mixture. Though, indeed, an improvement of the flow behaviour is thus obtained, the latter yet remains rather poor, while it is at the expense of the heat resistance and the impact resistance of the polymer composition.

For a great many of the uses of ABS with improved heat resistance, the reduced heat resistance thus obtained would suffice. These are the so-called medium-heat ABS grades. The impact resistance of the polymer composition according to this German patent specification is, however, very moderate, particularly at low temperatures, so that in practice the possibilities of applying such a polymer composition are only very limited.

In the French patent specification FR—A—2 268 832 and FR—A—2 268 833 mouldable thermoplastic polymeric compositions comprising

(A) a graft copolymer with styrene and acrylonitrile grafted on a butadiene rubber,

(B) another graft copolymer with less particle size than (A) of styrene and acrylonitrile on a butadiene rubber, and

(C) a copolymer of acrylonitrile and α-methylstyrene (and/or styrene), are described.

However the content of butadiene rubber in the graft copolymer (B) is 40—60%, but only 10—25% in the present invention.

The impact resistance in the French specifications is much lower than in our invention. A further important advantage of the present application is that it is not necessary to prepare two rubbers who requires two different particle sizes for the rubber in each graft copolymer component.

The purpose of the invention, therefore, is to provide a polymer composition with an improved heat resistance, compared with a graft copolymer of styrene and acrylonitrile on a rubber, combined with a good flow behaviour and a good impact resistance, particularly at low temperatures.

The invention is characterized by a polymer composition comprising:

A. one or more graft copolymers obtained by polymerizing 20—80 parts by weight of a monomer mixture consisting of

20—40% by weight of acrylonitrile

50—80% by weight of styrene and

# 0 048 059

0—30% by weight of one or more other monomers
in the presence of 20—80 parts by weight of rubber (in respect of 100 parts by weight of graft copolymer) and

B. one or more graft copolymers obtained by polymerizing 75—90 parts by weight of a monomer mixture consisting of

20—40% by weight of acrylonitrile
50—80% by weight of styrene and
0—30% by weight of one or more other monomers

in the presence of 10—25 parts by weight of rubber (in respect of 100 parts by weight of graft copolymer) and

C. a copolymer of α-methylstyrene and acrylonitrile obtained by polymerization of 20—40 parts by weight of acrylonitrile and 60—80 parts by weight of α-methylstyrene, the rubber content of which polymer composition is between 10 and 30% by weight, while the difference in rubber content of the graft copolymers is at least 5% by weight.

Surprisingly it has been found that in such a composition a comparatively good heat resistance is accompanied by a good flow behaviour and a good impact resistance, particularly at low temperatures. This is particularly of importance for complicated products, such as the fronts of motor cars. An additional advantage is the fact that with these polymer compositions there are no problems with respect to the strength of fusion seams. Thanks, in part, to the good flow behaviour, these fusion seams are of sufficient strength and not or hardly visible.

A preferred embodiment of the invention is characterized in that the flow index (V) of the copolymer of α-methylstyrene and acrylonitrile is at least 12.5, while the ratio between spiral flow length and flow index is 3.0. More specifically the spiral flow length is at least 65, preferably at least 70.

The flow index of the copolymer is preferably at least 12.5, because the fact is that at lower flow index values it will be virtually impossible to obtain the correct value for the spiral flow length of the copolymer.

More specifically the upper limit of the flow index of the copolymer is 25.

Optimum results are obtained if the spiral flow length/flow index ratio of the copolymer is at least 3.5.

Flow index (V) is understood to mean the quantity of polymer flowing out of a capillary with a diameter of 1 mm and a length of 2 mm at 230°C, and under a pressure of 30 bar, expressed in $10^{-9}$ m$^3$/s (see also British patent specification 1,500,525).

The spiral flow length (S) is, in this connection, the distance which a polymer melt with a temperature of 260°C on entry of the mould covers, under an initial pressure of 742 bar, in a mould kept at 50°C, which mould has ducts of a width of 20 mm and a thickness of 3 mm (flat spiral length: H. Ebneth, K. Böhm, Plastverarbeiter, 19 (1968), pages 261—269).

The polymer composition according to the invention combines a good heat resistance with a good flow behaviour, impact resistance, flexural strength and tensile strength. On the grounds of the quantity of copolymer of α-methylstyrene and acrylonitrile applied, particularly the impact resistance and the flexural strength might be expected not to be satisfactory. It has been found that the combination of the rubber content of the graft copolymers on the one side and the minimum flow index and S/V of the copolymer on the other produces a polymer composition of an optimum quality in respect of the various properties.

The polymer composition according to the invention preferably consists of:
5—95% by weight of A+B, and
5—95% by weight of C.

According to a more preferred embodiment the composition consists of:
40 to 90% by weight of A+B, and
10 to 60% by weight of C, in which composition the weight ratio A:B is between 10:1 and 1:10, more specifically
40 to 80% by weight of A+B and 20 to 60% by weight of C.

A further preferred composition consists of:
45 to 85% by weight of A+B, and
15 to 55% by weight of C.

With this polymer composition an optimum ratio is achieved between the various properties that are of importance.

The chosen composition of the polymer composition is preferably such that its rubber content is between 10 and 30% by weight, more specifically between 10 and 25% by weight. Within these limits of the rubber content a polymer composition is obtained with a good impact resistance combined with good processability.

According to a preferred embodiment the polymer composition contains two graft copolymers having a rubber content of between 20 to 60% by weight and one graft copolymer having a rubber content between 10 and 20% by weight.

Preferably graft copolymers are applied obtained by polymerizing styrene and acrylonitrile in the presence of a rubber.

For this purpose the various polymerization techniques known in the art, such as emulsion, suspension, mass and solution polymerization or combinations thereof, such as mass-suspension, emulsion-mass and emulsion-suspension polymerization, are suitable.

3

In this context the term 'styrene' also includes styrene with one or more substituents in the aromatic nucleus, or mixtures of styrene with one or more substituted styrenes.

One or more of the graft copolymers may contain up to 30 parts by weight of one or more other monomers chosen from the group of halogenated styrene, vinylacetate, maleic anhydride, methylmethacrylate and α-methylstyrene.

If such a monomer is applied, α-methylstyrene is preferred, as this enhances the compatibility with the copolymer.

Likewise the copolymer of α-methylstyrene and acrylonitrile may contain up to 25% by weight of other monomers, such as the group specified above, in which α-methylstyrene is replaced by styrene.

Preferred monomer is styrene as the use thereof enhances the compatibility of the copolymer with the graft-copolymer, especially if the graft-copolymer also contains styrene and α-methylstyrene.

For the preparation of the copolymer of α-methylstyrene and acrylonitrile preference is given to preparation in emulsion, but it is possible also to apply the other polymerization techniques mentioned above.

For both the graft copolymers and the copolymer of α-methylstyrene and acrylonitrile, the usual techniques may be applied in case of emulsion polymerization.

In the event of polymerization in aqueous emulsion, the usual auxiliary materials required for this purpose must be applied, such as emulsifiers, lye, salts, soaps, initiators such as peroxides, and chain length regulators.

Suitable chain length regulators are organosulphur compounds, such as the much used mercaptans, as well as the dialkyl dixanthogens, diarylsulphides, mercapto thiazoles, tetraalkylthiuram mono- and disulphides, etc. separately or mixed with each other, as well as hydroxyl compounds, such as terpinolenes. Besides, the dimer of α-methylstyrene or an α-alkene with a relatively long chain can be used as well.

The commercially most widely used chain length regulators are particularly the mercapto compounds, and of these the hydrocarbyl mercaptans with 8—20 carbon atoms per molecule are now much used. More specifically preference is given to mercaptans with a tertiary alkyl group.

The quantity of organosulphur compound may vary within wide limits, depending on the mixture chosen, the specific compound, polymerization temperature, emulsifier and other variables relating to the recipe. A good result can be achieved by using 0.01—5 parts by weight preferably 0.05—2 parts by weight (per 100 parts by weight of monomer) of organosulphur compound. Suitable organosulphur compounds comprise n-octyl mercaptan, n-dodecyl mercaptan, tertiary dodecyl mercaptan, tertiary nonyl mercaptan, tertiary hexadecyl mercaptan, tertiary octadecyl mercaptan, tertiary eicosyl mercaptan, secondary octyl mercaptan, secondary tridecyl mercaptan, cyclododecyl mercaptan, cyclododecadienyl mercaptan, aryl mercaptan, such as 1-naphthalene thiol, etc., bis tetrahydrofural xanthogen, diphenyl disulphide, bis(tetramethylthiuram disulphide), 2-mercaptobenzathiazole and the like. Mixtures of these compounds can also be used.

As emulsifiers, widely different compounds can be used, such as disproportionated rosin soap, fatty acid soap, mixtures of these compounds, aryl sulphonates, alkylaryl sulphonates and other surface-active compounds and mixtures thereof. Non-ionogenic emulsifiers, such as polyethers and polyols, can also be used. The quantities of emulsifiers used depend on the type of emulsifier, as well as on the reaction parameters and the concentrations of polymerizable monomer in the emulsion polymerization system.

Suitable compounds yielding free radicals are, for the emulsion polymerization process, organic or inorganic peroxides, hydroperoxides, azo compounds, as well as redox initiator systems. These compounds can be added at the beginning of the polymerization process. It is also possible to add these compounds partly at the beginning and partly in the course of the polymerization process.

Preferably alkali- or ammonium persalts and/or redox systems are chosen as initiators. Particularly potassium persulphate, ammonium persulphate and sodium persulphate must be mentioned. Examples of suitable redox systems are persalts (for instance perchlorates or persulphates), tertiary butyl hydroperoxide, cumene hydroperoxide, diisopropylbenzenehydroperoxide and methylcyclohexylhydroperoxide, combined with reductants based on acids containing sulphur in a low valence state, such as sodiumformaldehydesulphoxylate, bisulphide, pyrosulphide, or with organic bases, such as triethanolamine, with dextrose, sodium pyrophosphate and mercaptans or combinations thereof, optionally in combination with metal salts, such as ferrous sulphate. These initiators or initiator systems can be dosed in one or more steps or even gradually.

In those cases in which α-methylstyrene-acrylonitrile copolymers are prepared by means of suspension polymerization, it is possible to apply the usual suspension stabilizers, for instance polyvinyl alcohol or partially hydrolyzed polyvinyl acetate, as well as hardly soluble metal phosphates.

In case the copolymer is applied according to the preferred embodiment, in which embodiment a certain spiral flow length, flow index and ratio between these is necessary, preference is given to emulsion polymerization, because with this process, compared with, for instance, mass or solution polymerization, a copolymer of α-methylstyrene and acrylonitrile complying with the stated requirements can be obtained in a relatively simple manner.

In a preparation of the copolymer in emulsion it will suffice to adjust the consumption pattern of the chain length regulator by, among other things, variation of the stirring pattern, respectively adjustment of

4

the stirring speed, in which adjustment a lower stirring speed will result in an increase of the S/V. Of course, a minimum stirring speed is necessary to obtain and maintain a proper dispersion.

This pattern may also be influenced by reducing the pH to a value lower than 11 or by reducing the concentration of the chain length regulator in the beginning of the polymerization process, as well as by applying an adjusted temperature profile.

In addition to these possibilities to reach the desired spiral flow length, flow index and S/V, the manner of monomer addition may be adjusted as well, or extra initiator may be added after commencement of the polymerization process. Besides, it is possible also to add the chain length regulator only after polymerization has been going on for some time. It is also possible to apply combinations of two or more of the said measures.

Another possibility to make a copolymer of α-methylstyrene and acrylonitrile with the desired properties is formed by the adjustment of the polymerization process in such a manner that a molecular weight distribution with two or more peaks is obtained or by the combination of two polymerization processes.

If desired, the copolymer may also contain minor quantities of one or more other monomers. These quantities are preferably smaller than 6% by weight in respect of the copolymer, more specifically smaller than 2% by weight.

A specification of a copolymer which can be used in the polymer composition as component C has been given in EP—A—44101.

As rubber for the preparation of the graft copolymers all rubbers are suitable in principle. Preferably these rubbers have a glass-transition temperature below −50°C.

Preference is given to rubber based on butadiene, such as polybutadiene, butadiene-styrene-, butadiene-acrylonitril, and/or butadiene-acrylate-rubbers. In order to obtain a polymer composition with a good impact resistance, a rubber latex with a weight-average particle size ($d_{50}$, determined with electron microscope) of between 0.04 and 0.70 μm is preferably started from.

This, therefore, means that in such a case the preparation of the graft copolymer is carried out at least partly in emulsion.

The process according to which this rubber latex is prepared is preferably regulated in such a manner that highly cross-linked products are obtained. The gel content should preferably be higher than 70% by weight (determined in methylethylketone or toluene). With a high butadiene content of the rubber this degree of cross-linking can be obtained by polymerizing to high degrees of conversion or by using cross-linking agents, that is polyfunctional monomers, such as divinylbenzene or ethyleneglycol-dimethacrylate.

If for the graft copolymerization no use is made of an emulsion polymerization, rubbers made from solutions thereof in organic solvents can also be used. In that case, however, it is desirable to carry out the graft polymerization reaction for instance in the form of a mass-suspension polymerization reaction.

In those cases in which the rubbers are prepared by emulsion polymerization the emulsifiers, activators and polymerization auxiliaries used for the preparation of the α-methylstyrene-acrylonitrile copolymers can be applied. Prior to the grafting reaction, the rubber latex must be degassed in order to suppress undesired reactions initiated by non-converted monomer.

Preference is given to the use of polybutadiene-homopolymers or butadiene-copolymers with a butadiene content of more than 60% by weight. If other dienes, for instance isoprene, or the lower alkyl esters or acrylic acid, are used as comonomers, the butadiene content of the rubber can be reduced to 30% by weight without any disadvantage occurring in respect of the properties of the polymer composition. In principle it is also possible to prepare the graft polymer according to the invention from saturated rubbers, for instance from ethylenevinylacetate copolymers with a vinylacetate content lower than 50%, or from ethylene-propylene-diene terpolymers (these dienes are not conjugated; examples are: 1.4 hexadiene, ethylidene norbornene, dicyclopentadiene), as well as acrylate rubber, chlorinated polyethylene or chloroprene rubber. Mixtures of two or more rubbers can also be applied.

The polymer composition generally contains the usual additives, such as antioxidants, pigments, processing aids, fillers, antistatics, flame retardants and the like.

Finally, the invention also relates to an object wholly or partly made from the polymer composition described above.

The invention will now be elucidated by means of the following examples without being restricted thereto.

Examples I up to and including IV

On the basis of two general purpose ABS graft copolymers consisting of polybutadiene with styrene and acrylonitrile grafted thereon in a weight ratio of 70/30 and various copolymers of α-methylstyrene and acrylonitrile, a number of polymer compositions were prepared. The graft copolymer used had the following properties:

TABLE 1

| Graft copolymers | % rubber | Izod (KJ/m$^2$) | HDT (°C) | Flow index ($10^{-9}$ m$^3$/s) | Spiral flow length (cm) |
|---|---|---|---|---|---|
| A | 38 | 47 | 94 | 5 | 55 |
| B | 32 | 45 | 95 | 10 | 60 |
| C | 25 | 44 | 96 | 30 | 68 |
| D | 16 | 21 | 95 | >150 | 140 |

The properties of the various copolymers of α-methylstyrene and acrylonitrile were as follows:

TABLE 2

| Copolymer | Flexural strength N/mm$^2$ | HDT °C (tempered) | Flow index (V) | Spiral flow length (S) | S/V |
|---|---|---|---|---|---|
| 1 | 131 | 117 | 16 | 75 | 4.7 |
| 2 | 122 | 116 | 21 | 82 | 3.9 |
| 3 | 140 | 118 | 14 | 75 | 5.4 |
| 4 | 109 | 117 | 30 | 78 | 2.6 |

From these graft copolymers and copolymers a number of polymer compositions were prepared, containing various amounts of the constituents given in the Tables 1 and 2. Furthermore two compositions were prepared containing an additional amount of a lubricant.

With the exception of the above referred to compositions, all of them contained approximately 1% wt. of one or more stabilisers and 0.5% wt. of a lubricant.

The compositions, together with the mechanical properties thereof, are given in Table 3.

TABLE 3 (part 1)

| Example | 1 | 2 | 3 | 4 | 5 | 6 |
|---|---|---|---|---|---|---|
| Copolymer (% wt.) | 30 | 30 | 30 | 30 | 30 | 36 |
| Graft copolymer[1] A (% wt.) | — | 20 | 20 | — | 20 | 24 |
| Graft copolymer[1] B (% wt.) | — | — | — | 20 | — | — |
| Graft copolymer[1] C (% wt.) | 20 | — | — | — | — | — |
| Graft copolymer[1] D (% wt.) | 50 | 50 | 50 | 50 | 50 | 40 |
| Dioctylphthalate (% wt.) | — | — | — | — | — | — |
| Ethylenebisstearamide (% wt.) | — | — | — | — | — | — |
| Izod[2] | 21 | 21 | 18 | 25 | 28 | 19 |
| HDT[3] | 99 | 98 | 100 | 97 | 98 | 100 |
| Flow-index (V)[4] | 59 | 50 | 50 | 60 | 60 | 49 |
| Type of copolymer[5] | 4 | 1 | 1 | 4 | 4 | 4 |
| Amount of rubber in composition (% wt.) | 12.8 | 15.6 | 15.6 | 14.4 | 15.6 | 15.5 |

[1]See Table 1.
[2]Notched impact resistance ($kJ/m^2$) according to ASTM D 256, measured at 23°C.
[3]Heat distortion temperature (annealed) according to ASTM 648.
[4]Flow index (V) as defined in the description.
[5]See Table 2.

TABLE 3 (part 2)

| Example | 7 | 8 | 9 | 10 | 11 | 12 |
|---|---|---|---|---|---|---|
| Copolymer (% wt.) | 42 | 30 | 30 | 30 | 33 | 33 |
| Graft copolymer A (% wt.) | 28 | 20 | 20 | 20 | 22 | 22 |
| Graft copolymer B (% wt.) | — | — | — | — | — | — |
| Graft copolymer C (% wt.) | — | — | 50 | 30 | 20 | 25 |
| Graft copolymer D (% wt.) | 30 | 50 | — | 20 | 25 | 20 |
| Dioctylphthalate (% wt.) | — | 2 | — | — | — | — |
| Ethylenebisstearamide (% wt.) | — | — | — | — | — | 2 |
| Izod[2] | 17 | 21 | 30 | 27 | 26 | 27 |
| HDT[3] | 103 | 90 | 101 | 100 | 101 | 98 |
| Flow-index[4] | 37 | 74 | 24 | 28 | 30 | 36 |
| Type of copolymer | 4 | 2 | 3 | 2 | 2 | 2 |
| Amount of rubber in composition (% wt.) | 15.4 | 15.6 | 19.6 | 18.0 | 17.2 | 17.6 |

[1-5]See Table 3, part 1.

TABLE 3 (part 3)

| Example | 13 | 14 | 15 | 16 | 17 |
|---|---|---|---|---|---|
| Copolymer (% wt.) | 15 | 24 | 45 | 42 | 54 |
| Graft copolymer A[1] (% wt.) | 10 | 16 | 30 | 28 | 36 |
| Graft copolymer B[1] (% wt.) | — | — | — | — | — |
| Graft copolymer C[1] (% wt.) | — | 60 | 25 | 20 | 10 |
| Graft copolymer D[1] (% wt.) | 75 | — | — | 10 | — |
| Dioctylphthalate (% wt.) | — | — | — | — | — |
| Ethylenebisstearamide (% wt.) | — | — | — | — | — |
| Izod[2] | 17 | 31 | 22 | 23 | 18 |
| HDT[3] | 97 | 98 | 103 | 101 | 108 |
| Flow-index[4] | 90 | 24 | 21 | 27 | 18 |
| Type of copolymer[5] | 2 | 2 | 2 | 2 | 2 |
| Amount of rubber in composition (% wt.) | 15.8 | 20.5 | 16.8 | 17.0 | 16.1 |

[1-5]See Table 3, part 1.

In Table 4 a number of compositions, not according to the invention are given.

TABLE 4

| Example | 18 | 19 | 20 | 21 |
|---|---|---|---|---|
| Copolymer (% wt.) | 60 | 50 | 50 | 60 |
| Graft copolymer A (% wt.) | 40 | — | 50 | — |
| Graft copolymer B (% wt.) | — | — | — | — |
| Graft copolymer C (% wt.) | — | — | — | 40 |
| Graft copolymer D (% wt.) | — | 50 | — | — |
| Izod[2] | 17 | 9 | 35 | 11 |
| HDT[3] | 110 | 96 | 106 | 109 |
| Flow-index[4] | 8 | 70 | 13 | 22 |
| Type of copolymer[5] | 3 | 3 | 4 | 4 |
| Amount of rubber in the composition | 15.2 | 8 | 19 | 9.6 |

[1-5]See Table 3, part 1.

From the Examples of Table 3 and the comparative examples of Table 4, it can be noted, that according to the invention a composition is obtained having an optimal balance between the various properties concerned.

8

**Claims**

1. Polymer composition based on one or more graft copolymers of styrene and acrylonitrile on a rubber and a copolymer of α-methylstyrene and acrylonitrile, characterized in that the composition comprises:

A. One or more graft copolymers, each of them obtained by polymerizing 20—80 parts by weight of a monomer mixture consisting of

20—40% by weight of acrylonitrile,

50—80% by weight of styrene and

0—30% by weight of one or more other monomers

in the presence of 20—80 parts by weight of rubber (in respect of 100 parts by weight of graft copolymer) and

B. one or more graft copolymers, each of them obtained by polymerizing 75—90 parts by weight of a monomer mixture consisting of

20—40% by weight of acrylonitrile,

50—80% by weight of styrene, and

0—30% by weight of one or more other monomers

in the presence of 10—25 parts by weight of rubber (in respect of 100 parts by weight of graft copolymer) and

C. a copolymer of α-methylstyrene and acrylonitrile obtained by polymerizing 60—80 parts by weight of α-methylstyrene and 20—40 parts by weight of acrylonitrile, of which polymer composition the rubber content is between 10 and 30% by weight, while the difference in rubber content of the graft copolymers is at least 5% by weight.

2. Polymer composition according to claim 1, characterized in that the copolymer of α-methylstyrene and acrylonitrile has a flow index of at least 12.5 and the ratio between spiral flow length and flow index is at least 3.0.

3. Polymer composition according to claim 1 or 2, characterized in that the spiral flow length of the copolymer applied is at least 65, preferably at least 70.

4. Polymer composition according to one of the claims 1—3, characterized in that the composition consists of:

5—95% by weight of A+B

5—95% by weight of C.

5. Polymer composition according to claims 1—4, characterized in that the composition consists of 40 to 90% by weight of A+B

10 to 60% by weight of C, in which composition the weight ratio A:B is between 1:10 and 10:1.

6. Polymer composition according to claim 5, characterized in that the composition consists of 45 to 85% by weight of A+B, and

15 to 55% by weight of C.

7. Polymer composition according to one of the preceding claims, characterized in that the one or more graft copolymers A have been prepared by polymerizing 40—80 parts by weight of the monomer mixture in the presence of 20 to 60 parts by weight of rubber.

8. Polymer composition according to any one or more of the claims 1—7, characterized in that the one or more graft copolymers B have been prepared by polymerizing 80—90 parts by weight of styrene and acrylonitrile in the presence of 10—20 parts by weight of rubber.

9. Moulded product wholly or partly made from a polymer composition according to any one of the claims 1—8.


**Patentansprüche**

1. Polymerzusammensetzung auf der Basis eines oder mehrerer Pfropfcopolymerer von Styrol und Acrylnitril auf einem Kautschuk und eines Copolymers von α-Methylstyrol und Acrylnitril, dadurch gekennzeichnet, daß die Zusammensetzung umfaßt:

A. Ein oder mehrere Pfropfcopolymere, jedes erhalten durch Polymerisieren von

20—80 Gew.-Teilen eines Monomergemisches bestehend aus

20—40 Gew.-% Acrylnitril,

50—80 Gew.-% Styrol und

0—30 Gew.-% eines oder mehrerer anderer Monomerer

in Gegenwart von 20—80 Gew.-Teilen Kautschuk (bezogen auf 100 Gew.-Teile Pfropfcopolymer) und

B. ein oder mehrere Pfropfcopolymere, jedes erhalten durch Polymerisieren von

75—90 Gew.-Teilen eines Monomergemisches bestehend aus

20—40 Gew.-% Acrylnitril,

50—80 Gew.-% Styrol und

0—30 Gew.-% eines oder mehrerer anderer Monomerer

in Gegenwart von 10—25 Gew.-Teilen Kautschuk (bezogen auf 100 Gew.-Teile Pfropfcopolymer) und

C. ein Copolymer von α-Methylstyrol und Acrylnitril, erhalten durch Polymerisieren von 60—80

Gew.-Teilen α-Methylstyrol und 20—40 Gew.-Teilen Acrylnitril, in welcher Polymerzusammensetzung der Kautschukgehalt zwischen 10 und 30 Gew.-% beträgt, während der Unterschied im Kautschukgehalt der Pfropfcopolymeren mindestens 5 Gew.-% beträgt.

2. Polymerzusammensetzung nach Anspruch 1, dadurch gekennzeichnet, daß das Copolymer von α-Methylstyrol und Acrylnitril einen Fließindex von mindestens 12,5 hat und das Verhältnis zwischen Spiralfließlänge und Fließindex mindestens 3,0 beträgt.

3. Polymerzusammensetzung nach Anspruch 1 oder 2, dadurch gekennzeichnet, daß die Spiralfließlänge des verwendeten Copolymers mindestens 65, vorzugsweise mindestens 70 beträgt.

4. Polymerzusammensetzung nach einem der Ansprüche 1—3, dadurch gekennzeichnet, daß die Zusammensetzung besteht aus:

5—95 Gew.-% A+B

5—95 Gew.-% C.

5. Polymerzusammensetzung nach den Ansprüchen 1—4, dadurch gekennzeichnet, daß die Zusammensetzung besteht aus:

40 bis 90 Gew.-% A+B

10 bis 60 Gew.-% C, in welcher Zusammensetzung des Gewichtsverhältnis A:B zwischen 1:10 und 10:1 beträgt.

6. Polymerzusammensetzung nach Anspruch 5, dadurch gekennzeichnet, daß die Zusammensetzung besteht aus

45 bis 85 Gew.-% A+B, und

15 bis 55 Gew.-% C.

7. Polymerzusammensetzung nach einem der vorhergehenden Ansprüche, dadurch gekennzeichnet, daß das bzw. die Pfropfcopolymeren A hergestellt wurden durch Polymerisieren von 40—80 Gew.-Teil des Monomergemisches in Gegenwart von 20 bis 60 Gew.-Teilen Kautschuk.

8. Polymerzusammensetzung nach einem oder mehreren der Ansprüche 1—7, dadurch gekennzeichnet, daß das bzw. die Pfropfcopolymeren B hergestellt wurden durch Polymerisieren von 80—90 Gew.-Teilen Styrol und Acrylnitril in Gegenwart von 10—20 Gew.-Teilen Kautschuk.

9. Geformtes Produkt, gänzlich oder teilweise hergestellt aus einer Polymerzusammensetzung gemäß einem der Ansprüche 1—8.

**Revendications**

1. Composition polymère à base d'un ou plusieurs copolymères greffés styrène/acrylonitrile sur un caoutchouc et un copolymère α-méthyl-styrène/acrylonitrile, caractérisée en ce que la composition comprend:

A. un ou plusieurs copolymères greffés qu'on obtient en polymérisant 20 à 80 parties pds d'un mélange de monomères consistant en:

20 à 40% pds d'acrylonitrile,

50 à 80% pds de styrène et

0 à 30% pds d'un ou plusieurs autres monomères,

en présence de 20 à 80 parties pds de caoutchouc (par rapport à 100 parties pds de copolymère greffé);

B. un ou plusieurs copolymères greffés qu'on obtient en polymérisant 75 à 90 parties pds d'un mélange de monomères consistant en:

20 à 40% pds d'acrylonitrile,

50 à 80% pds de styrène et·

0 à 30% pds d'un ou plusieurs autres monomères,

en présence de 10 à 25 parties pds de caoutchouc (par rapport à 100 parties en poids de copolymère greffé);

C. un copolymère α-méthylstyrène/acrylonitrile qu'on obtient par polymérisation de 20 à 40 parties pds d'acrylonitrile et 60 à 80 parties pds d'α-méthylstyrène, la teneur en caoutchouc de cette composition polymère étant de 10 à 30% en poids, alors que la différence des teneurs en caoutchoucs dans les copolymères greffés est d'au moins 5% pds.

2. Composition polymère selon la revendication 1, caractérisée en ce que le copolymère α-méthylstyrène/acrylonitrile présente un indice de fluidité d'au moins 12,5 et le rapport entre la longueur de l'écoulement en spirale et l'indice de fluidité est d'au moins 3,0.

3. Composition polymère selon la· revendication 1 ou 2, caractérisée en ce que la longueur d'écoulement en spirale du copolymère est d'au moins 65 et de préférence d'au moins 70.

4. Composition de polymère selon l'une des revendications 1 à 3, caractérisée en ce que la composition comprend:

5 à 95% pds de A+B

5 à 95% pds de C.

·5. Composition polymère selon les revendications 1 à 4, caractérisée en ce que la composition comprend:

40 à 90% pds de A+B

10 à 60% pds de C, composition dans laquelle le rapport pondérale A:B est compris entre 1:10 et 10:1.

6. Composition polymère selon la revendication 5, caractérisée en ce que la composition comprend:
45 à 85% pods de A+B, et
15 à 55% pds de C.

7. Composition polymère selon l'une quelconque des revendications précédentes, caractérisée en ce qu'on prépare le ou les copolymères greffés (A) en polymérisant 40 à 80 parties pds du mélange des monomères en présence de 20 à 60 parties pds de caoutchouc.

8. Composition polymère selon l'une quelconque ou plusieurs des revendications 1 à 7, caractérisée en ce qu'on prépare le ou les copolymères greffés (B) en polymérisant 80 à 90 parties pds de styrène et d'acrylonitrile en présence de 10 à 20 parties pds de caoutchouc.

9. Produit moulé fabriqué entièrement ou partiellement en une composition polymère selon l'une quelconque des revendications 1 à 8.